# EUROPÄISCHE PATENTANMELDUNG

(11) **EP 1 045 238 A2**
(43) Veröffentlichungstag der Anmeldung: **18.10.2000**
(21) Anmeldenummer: 00810299.8
(22) Anmeldetag: 05.04.2000
(51) Int. Cl.: G01N 1/10

(54) **Probeentnahme-Ventil und -Vorrichtung zur verlustarmen Entnahme von Flüssigkeitsproben aus einem Hohlkörper**

(30) Priorität: 14.04.1999 CH 68999
(71) Anmelder: Nisco Engineering AG, 8008 Zürich (CH)
(72) Erfinder: Suter, Nicolai, 8008 Zürich (CH)
(74) Vertreter: Münch, Otto, Dipl.-Ing.

(57) **Zusammenfassung**

Die Vorrichtung hat ein Probeentnahmeventil (1), das an einem Behälter (5) montiert ist. Das Ventil (1) hat eine Ventilspindel (15) mit einer Längsbohrung (25), die vorn in eine Querbohrung (26) mündet und an diesem Ende in einer Öffnung (7) abdichtend geführt ist. Die Spindel (15) ist in zwei Stellungen durch ein Hubelement (21) verschiebbar. In der einen Endstellung mündet die Querbohrung (26) in den Innenraum (6) des Behälters (5), in der anderen in eine Ventilkammer (10). Das andere Ende der Längsbohrung (25) kommuniziert mit einem Stutzen (27), der über Leitungen (67, 68) und ein Ventil (70) mit einem Autosampler (72) verbunden ist. Die Kammer (10) ist über einen Stutzen (33) mit drei Ventilen (51-53) verbunden. Über das Ventil (51) kann der Kammer (10) Dampf zur Sterilisation, über das Ventil (52) eine Reinigungsflüssigkeit und über das Ventil (53) steriles Gas zum Fördern der entnommenen Probe zum Autosampler (72) zugeführt werden. Die Vorrichtung ermöglicht praktisch verlustfreies, automatisches, periodisches Entnehmen kleiner Proben von Flüssigkeit aus dem Behälter (5).

## Beschreibung

Aus der EP-A-350 723 ist ein Probeentnahmeventil bekannt mit einem Gehäuse, das an einem Behälter oder einer Leitung angebracht. ist. Das Gehäuse hat eine achsiale Bohrung, in welcher eine Ventilspindel geführt ist. Bei einer Ausführungsform hat die Ventilspindel eine Längsbohrung, die benachbart dem freien Ende in eine durchgehende Querbohrung mündet. Beidseits der Querbohrung sind in Nuten der Spindel Dichtringe eingesetzt. Die Spindel ist in eine erste Stellung, in welcher die Querbohrung in den Innenraum des Behälters ragt und in eine zweite Stellung verfahrbar, in welcher sie abgedichtet ist. In der ersten Stellung kann eine Probe durch die Längsbohrung abgesaugt werden.

Dieses Probeentnahmeventil kann nur entweder gemeinsam mit dem Behälter oder nach Demontage gereinigt und sterilisiert werden. Eine automatische periodische Probeentnahme bei einem laufenden Prozess ist damit nicht möglich.

Probeentnahmen sind in der sterilen Verfahrenstechnik (Pharma- und Biotechnologie) weitverbreitet. Wachsende Anforderungen in der Produktion (Prozesskontrolle/Probenarchivierung) sowie in der Prozessentwicklung fördern die Entwicklung neuer, verbesserter Systeme. Die Produkte werden immer teurer und die Produktionsvolumina tendenziell kleiner. Zudem erlauben die heutigen Analysemethoden, mit immer kleineren Proben auszukommen. Dadurch besteht eine Nachfrage nach immer kleineren Entnahmemengen und die Anforderung, den Verlust so klein wie möglich zu halten. Vor allem im Bereich Prozessentwicklung besteht die Nachfrage für regelmässige Probeentnahmen im 24-Stunden-Betrieb. Eine weitere Verwendung in der sterilen Produktion ist die Probeentnahme aus produktfördernden Leitungen.

Der vorliegenden Erfindung liegt die Aufgabe zugrunde, unter sterilen Bedingungen eine Probe von definiertem Volumen aus einem Steriltank oder aus einer sterilen Leitung zu entnehmen. Die Probe soll entweder aus einem Stutzen direkt aus der Flüssigkeit oder über ein Tauchrohr entnommen werden können. Dieses definierte Volumen soll in einem zweiten Schritt möglichst vollständig ausgestossen und zu einem Abnahmeort befördert werden. Als Abnahmeort ist ein steriles Gebinde oder eine automatische sterile Abfüllmaschine, welche die Proben z.B. tiefgekühlt einlagert (Autosampler) oder aber eine automatische Analysemaschine (z.B. mit Probenaufbereitung, mit Gaschromatographen und mit automatischer Messwertverarbeitung) denkbar. In einem dritten Schritt muss das System vor Ort gereinigt (CIP) und sterilisiert (SIP) werden. Dieser Zyklus soll reproduzierbar und beliebig oft wiederholbar sein, ohne dass der Sterilbetrieb gefährdet ist.

Diese Aufgabe wird durch die Merkmalskombination der Ansprüche gelöst.

Nachfolgend werden Ausführungsbeispiele der Erfindung anhand der Zeichnungen erläutert. Darin zeigt:
- Figur 1a: ein erstes Ausführungsbeispiel eines Probeentnahmeventils,
- Figuren 1b bis 1d: Ausschnitte aus der Darstellung nach Figur la in drei verschiedenen Stellungen,
- Figuren 2a bis 2d: entsprechende Darstellungen einer zweiten Ausführungsform, und
- Figuren 3 und 4: zwei Ausführungsformen der Probeentnahmevorrichtung.

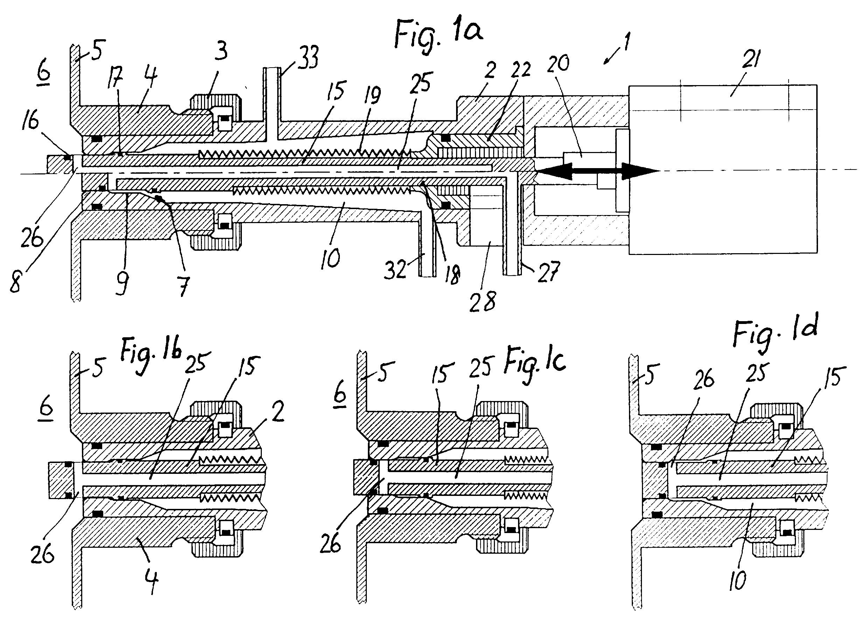

Das in Figuren 1a bis 1d dargestellte Probeentnahmeventil 1 hat ein zylindrisches Gehäuse 2, das stirnseitig mit einer Überwurfmutter 3 an einem Stutzen 4 eines Hohlkörpers 5 abdichtend angeschlossen ist. Der Hohlkörper 5 kann z.B. ein Reaktionsbehälter für eine flüssige Chemikalie, für Zellsuspensionen oder eine Leitung für derartige Flüssigkeiten sein. Der Stutzen 4 ist unterhalb des Flüssigkeitsniveaus im Innenraum 6 des Körpers 5 angeordnet. Das Gehäuse 2 hat eine gegen den Innenraum 6 offene, koaxiale, abgestufte Öffnung 7 mit einem dem Innenraum 6 zugewandten engeren zylindrischen Abschnitt 8 und einem zweiten zylindrischen Abschnitt 9 grösseren Durchmessers. Der Abschnitt 9 mündet in eine Ventilkammer 10. Durch diese erstreckt sich eine Ventilspindel 15, welche an ihrem freien Ende abdichtend in der Öffnung 7 geführt ist. Dazu hat die Spindel 15 zwei O-Ringe 16, 17. Die Spindel 15 ist in der oberen Hälfte von Figur la in der ausgefahrenen, in der unteren Hälfte in der zurückgezogenen Stellung dargestellt.

Am gegenüberliegenden Ende ist die Spindel 15 in einer weiteren Bohrung 18 eines mit dem Gehäuse 2 fest verbundenen Drehteils 22 geführt. An diesem Ende ist die Spindel 15 gegenüber dem Gehäuse 2 durch einen metallenen Faltenbalg 19 abgedichtet, dessen eines Ende mit der Spindel 15 und dessen anderes Ende mit dem Drehteil 22 verschweisst ist. Das Spindelende ist mit dem Huborgan 20 eines Betätigungselementes 21, z.B. eines Pneumatikzylinders, verbunden, das am Gehäuse 2 befestigt ist.

Durch die Spindel 15 erstreckt sich eine Längsbohrung 25, die an beiden Enden verschlossen ist und am vorderen Ende in mindestens eine Querbohrung 26 zwischen den O-Ringen 16, 17 mündet. Am gegenüberliegenden Ende mündet die Bohrung 25 in einen an der Spindel 15 angeschweissten, quer abstehenden Anschlussstutzen 27, der sich durch eine Öffnung 28 des Gehäuses 2 erstreckt.

Die Ventilkammer 10 ist leicht konisch mit dem grössten Durchmesser an dem dem Betätigungselement 21 zugewandten Ende. An diesem Ende hat die Kammer 10 auf der Unterseite einen Anschlussstutzen 32. An der Oberseite hat die Kammer 10 einen zweiten Anschlussstutzen 33.

Figur 1b zeigt die eine Endstellung der Spindel 15, in welcher die Querbohrung 26 in den Innenraum 6 mündet und der O-Ring 17 im Abschnitt 9 abdichtet. Figur 1d zeigt die zweite Endstellung, in welcher die Querbohrung 26 in den Abschnitt 9 mündet und daher mit der Ventilkammer 10 verbunden ist. Der O-Ring 16 dichtet im Abschnitt 8 ab. Figur lc zeigt eine Zwischenstellung, in welcher sowohl der O-Ring 16 im Abschnitt 8 als auch der O-Ring 17 im Abschnitt 9 abdichtet, die Querbohrung 26 also in beiden axialen Richtungen in der Öffnung 7 abgedichtet ist.

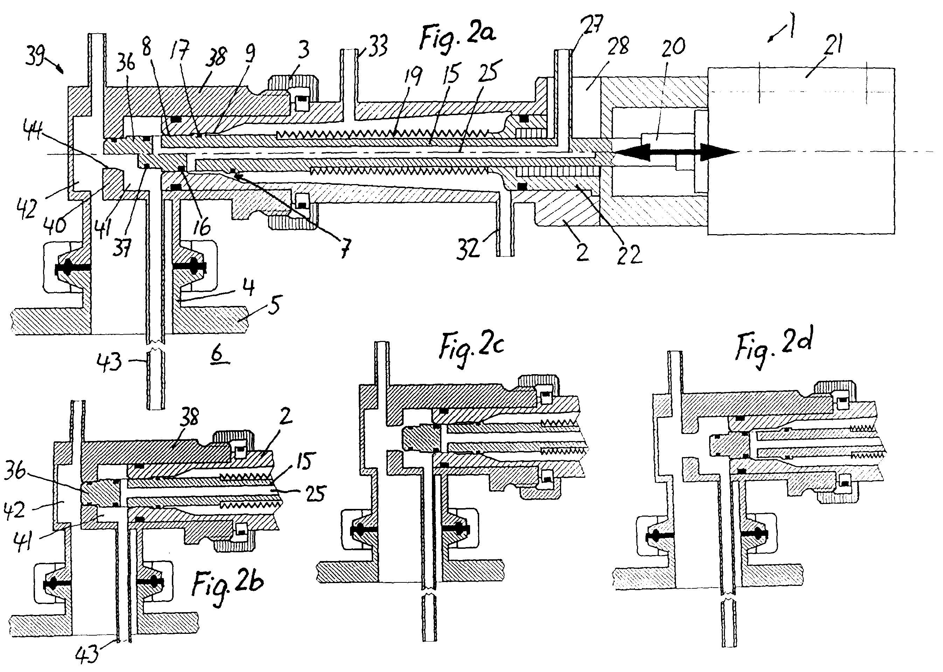

Die Figuren 2a bis 2d zeigen eine zweite Ausführungsform. Das Probeentnahmeventil 1 ist gleich ausgebildet wie jenes nach Figur 1, ausser dass die Spindel 15 eine koaxiale, zylindrische Verlängerung 36 mit einem weiteren O-Ring 37 hat. Das Gehäuse 2 ist in diesem Fall an einem Stutzen 38 eines Tauchrohradapters 39 befestigt, der auf dem in diesem Fall vertikalen Stutzen 4 abdichtend befestigt ist. Der Adapter 39 hat zwei durch eine Trennwand 40 voneinander getrennte Kammern 41, 42. An die der Öffnung 7 zugewandten Kammer 41 ist ein Tauchrohr 43 angeschlossen. Die Trennwand 40 hat eine Durchgangsbohrung 44 koaxial zur Öffnung 7, in welcher der O-Ring 37 in der ausgefahrenen Stellung der Spindel 15 abdichtet. Die Darstellungen nach Figuren 2b bis 2d entsprechen jenen nach Figuren 1b bis 1d.

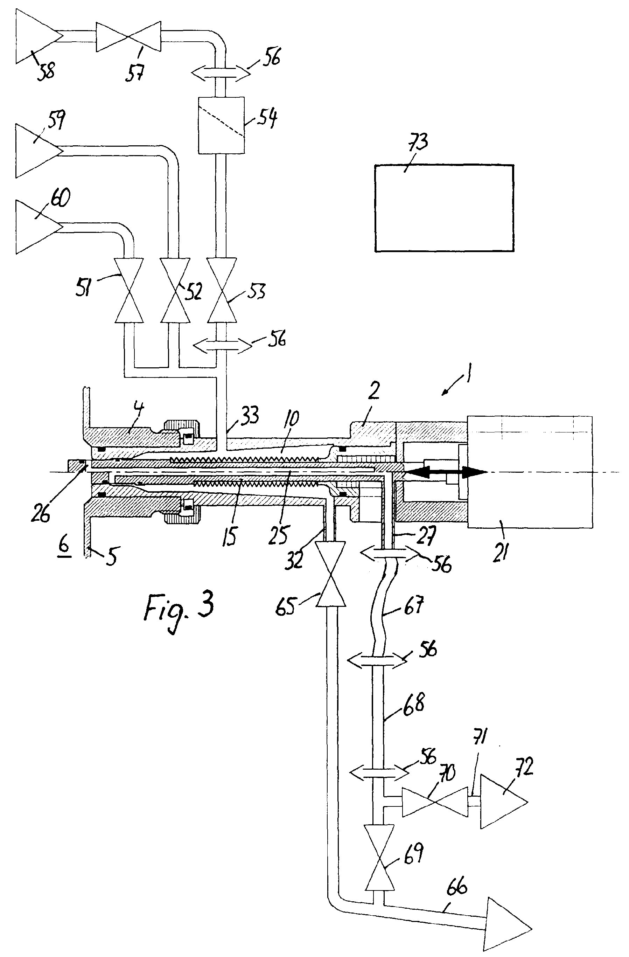

Figur 3 zeigt eine das Probeentnahmeventil 1 gemäss Figur la enthaltende vollautomatische Vorrichtung zur periodischen verlustfreien Entnahme von z.B. 10 ml Flüssigkeit in regelmässigen Abständen. An den Stutzen 33 sind über T-Stücke drei Ventile 51, 52, 53 angeschlossen. Zum Ventil 53 ist ein Sterilluftfilter 54 in Serie geschaltet. Die Einheit 55 bestehend aus dem Ventil 53 und dem Filter 54 ist über lösbare Kupplungen 56 mit einem weiteren Ventil 57 und über dieses mit einer Druckgasquelle 58 verbunden. Die Einheit 55 kann in einem Autoklaven sterilisiert werden. Je nach Beschaffenheit der zu probenden Flüssigkeit kann das Druckgas Luft, Stickstoff oder ein Edelgas sein. Das Ventil 52 ist an eine Quelle 59 für eine Reinigungsflüssigkeit angeschlossen. Die Quelle 59 kann auch mehrere Flüssigkeiten, z.B. Säuren, Laugen, Leitungswasser, Neutralisationsmittel enthalten, die nacheinander dem Ventil 52 zugeführt werden. Das Ventil 51 ist an eine Quelle 60 für ein Sterilisationsmedium, z.B. Wasserdampf, angeschlossen.

Der Stutzen 32 ist über ein Ventil 65 an eine Ablaufleitung 66 angeschlossen. Der Stutzen 27 ist mittels einer entsprechenden Kupplung 56 über eine flexible Leitung 67 und eine austauschbare, starre Leitung 68 mit zwei weiteren Ventilen 69, 70 verbunden. Das Ventil 69 verbindet die Leitung 68 mit der Ablaufleitung 66 und das Ventil 70 mit einer Leitung 71 zu einer Einrichtung 72 zum Behandeln oder Abfüllen der Probe. Das Probeentnahmeventil 1 und sämtliche übrigen Ventile 51-53, 57, 65, 69, 70 sind mit einer Steuereinrichtung 73 verbunden, mit welcher die Betätigung der Ventile nach einem programmierten Ablauf gesteuert wird.

Im Betrieb arbeitet die Vorrichtung wie folgt: Das am Behälter 5 fest montierte Probeentnahmeventil 1 sowie die Bohrungen 25, 26, der Stutzen 27 und die Leitungen 67, 68 werden durch Öffnen des Ventils 51 und Pulsieren der Ventile 65 und 69 sterilisiert, wobei die Anordnung der Stutzen 27, 32 nach unten und die konische Ausbildung der Kammer 10 dafür sorgen, dass kondensierendes Wasser abläuft. Die Spindel 15 ist in der zurückgezogenen Stellung nach Figur 1d. Die Ventile 52, 53 sind geschlossen. Zusätzlich kann die Leitung 71 durch Öffnen des Ventils 70 sterilisiert werden.

Nun werden die Ventile 51, 65, 69, 70 geschlossen. Beim Abkühlen des Gehäuses 2 kondensiert der verbleibende Dampf und es bildet sich ein Vakuum in der Ventilkammer 10 und in der Bohrung 25 und den Leitungen 67, 68. Zur Entnahme einer Probe wird die Spindel 15 in die Stellung nach Figur 1b geschaltet. Durch das Vakuum werden die Bohrung 25, der Stutzen 27 und die Leitungen 67, 68 mit der zu probenden Flüssigkeit aus dem Behälter 5 gefüllt. Das aufgenommene Flüssigkeitsvolumen kann durch Austausch der Leitung 68 gegen eine solche mit einem anderen Innendurchmesser oder einer anderen Länge verändert werden. Jedenfalls ist dieses Volumen exakt reproduzierbar. Nun wird das Ventil 53 geöffnet, so dass in die Kammer 10 sterile Druckluft eingespeist wird. Beim umschalten der Spindel 15 in die Stellung nach Figur 1d und Öffnen des Ventils 70 treibt die Druckluft die entnommene Probe praktisch vollständig in die Einrichtung 72. Das Ventil 69 kann nämlich so angeordnet werden, dass in dessen Zuleitung befindliche Flüssigkeit ebenfalls zur Leitung 71 abfliesst. Das Ventil 53 wird geschlossen.

Nun werden die Leitungen 67, 68, 71, der Stutzen 27 und die Bohrungen 25, 26 durch Öffnen der Ventile 52, 69, 70 mit der Reinigungsflüssigkeit gespült, die anschliessend bei der nachfolgenden Sterilisation wieder ausgeblasen wird.

Der beschriebene Vorgang kann sich automatisch periodisch wiederholen. Die beschriebene Vorrichtung und Betriebsweise hat folgende Vorteile: Es kann eine definierte, reproduzierbare Menge aus einem Sterilbehälter entnommen werden. Die Probeentnahme kann in einem einfacheren, technisch wenig aufwendigen Verfahren erfolgen als über ein Tauchrohr. Das totraumfreie Arbeiten garantiert, dass jederzeit eine den aktuellen Prozess repräsentierende Probe entnommen wird. Die Sterilisation des Ventils und das Reinigen desselben erfolgen in situ, d.h. vor Ort, im eingebauten Zustand und kann beliebig oft wiederholt werden, ohne dass bei der nachfolgenden Probeentnahme ein Risiko zur biologischen Kontamination besteht. Das Verfahren kann automatisiert werden. Das Verfahren eignet sich sowohl für die Probeentnahme von sterilen Behältern als auch von sterilen Leitungen. Die Probe wird (abgesehen von Benetzungseffekten an den Innenwänden) vollständig weiterbefördert. Der Mediumverlust ist äusserst gering. Weil die Querbohrung 26 in der Zwischenstellung gemäss Figur lc in beiden axialen Richtungen abgeschlossen ist, kann kein Druckgas aus der Ventilkammer 10 in den Behälter 5 entweichen. Durch den geringen Durchmesser der Bohrung 25 und der Leitungen 67, 68, 71 von z.B. 4 mm ist die Kontaktfläche zwischen dem austreibenden Druckgas und der Probe sehr gering. Dadurch ist die Gefahr des Schäumens oder Oxidierens (bei Luft) der Flüssigkeit minim.

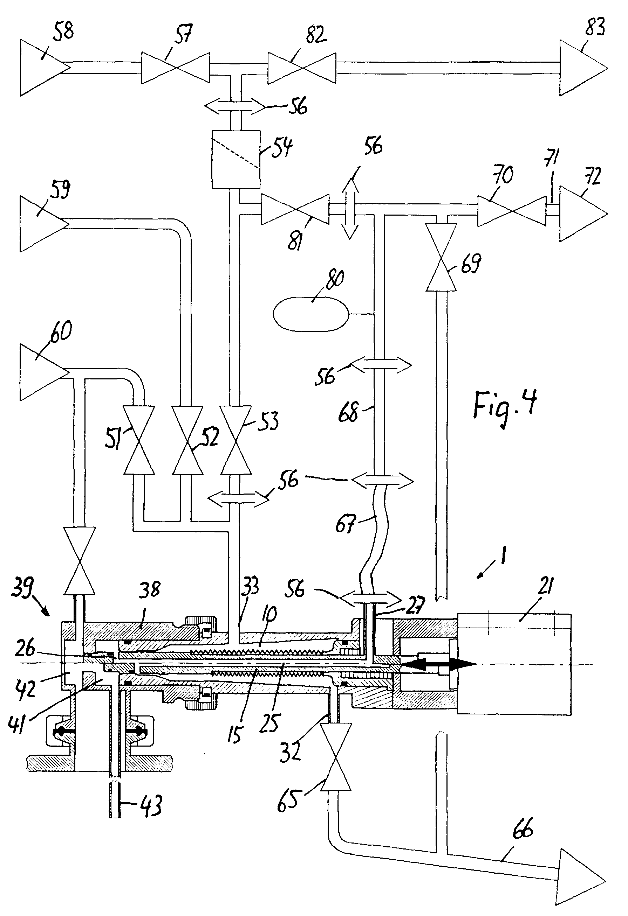

Bei der in Figur 4 dargestellten Vorrichtung sind analoge Teile mit gleichen Bezugszeichen versehen, so dass sich eine detaillierte Beschreibung dieser Teile erübrigt. Es handelt sich um eine Anwendung des Probeentnahmeventils 1 nach Figur 2. Der Stutzen 27 und die Leitungen 67, 68 sind nach oben gerichtet. Der Leitung 68 ist ein Niveaufühler 80 für die zu probende Flüssigkeit nachgeschaltet, z.B. eine Lichtschranke durch eine transparente Leitung. Der Ausgang dieses Fühlers 80 ist über ein zusätzliches Ventil 81 mit der Sterilgasseite des Filters 54 und der Eingang des Filters 54 über ein weiteres Ventil 82 mit einer Saugpumpe 83 verbunden.

Im Betrieb arbeitet die dargestellte Vorrichtung wie folgt: Die Spindel 15 ist in eingefahrenem Zustand nach Figur 2d. Die Ventile 52, 69 werden geöffnet und das Ventil 65 wird periodisch geöffnet, so dass die Bohrung 25, die Leitungen 67, 68 und der Fühler 80 sowie die Ventilkammer 10 gespült werden. Das Ventil 69 wird geschlossen und das Ventil 70 geöffnet, so dass auch die Leitung 71 zum Autosampler 72 gespült wird. Nach dem Reinigen mit Wasser und/oder Lauge wird die Flüssigkeit aus sämtlichen Leitungen und der Kammer 10 durch Schliessen des Ventils 52 und Öffnen des Ventils 53 ausgeblasen, wobei die Ventile 69, 70 abwechselnd und das Ventil 65 periodisch geöffnet werden. Zur Sterilisation wird nun das Ventil 53 geschlossen und das Ventil 51 geöffnet. Das Kondensat wird über die pulsierenden Ventile 65, 69 abgelassen. Zur Probeentnahme werden zunächst die Ventile 51, 65, 69, 70 geschlossen und die Spindel 15 wird ausgefahren, so dass die Bohrung 44 verschlossen ist. Um die noch im Tauchrohr 43 befindliche Flüssigkeit auszustossen, welche keine repräsentative Probe ergäbe, werden zunächst die Ventile 81 und 57 geöffnet, so dass die Flüssigkeit im Tauchrohr 43 durch die Leitungen 69, 68 und die Bohrung 25 durch steriles Gas verdrängt wird. Nach Ausstossen des Tauchrohres 43 wird die Flüssigkeit aus dem Tauchrohr 43 durch Öffnen der Ventile 81, 82 über die Pumpe 83 angesaugt. Je nach statischem Druck im Behälter 5 kann die Pumpe 83 auch weggelassen werden. Die Ventile 81, 80 werden geschlossen, sobald das Niveau der angesaugten Flüssigkeit den Fühler 80 erreicht. Damit ist wiederum in der Bohrung 25 und den Leitungen 67, 68 ein exakt definiertes Flüssigkeitsvolumen eingeschlossen. Nun werden die Ventile 53 und 57 geöffnet, so dass in die Kammer 10 steriles Gas einströmt. Die Spindel 15 wird zurückgezogen und die Probe durch Öffnen des Ventils 70 mittels des Gases gefördert. Danach ist die Vorrichtung zum Wiederholen des beschriebenen Vorgangs bereit.

Die Ausführungsform nach Figuren 2a bis 2d hat die zusätzlichen Vorteile, dass die Probe aus einem Stutzen entnommen werden kann, der über dem Flüssigkeitsstand im Behälter 5 liegt. Das Tauchrohr wird vor der Probeentnahme entleert. Damit ist sichergestellt, dass die entnommene Probe den aktuellen Stand des Prozesses widerspiegelt. Nach der Probeentnahme kommuniziert das Tauchrohr 43 mit dem Kopfraum des Steriltanks, so dass sich das Flüssigkeitsniveau mit jenem im Behälter ausgleicht.

## Patentansprüche

1. Probeentnahmeventil umfassend ein Gehäuse (2) mit einer Ventilkammer (10), in der eine Ventilspindel (15) angeordnet ist, deren erstes Ende mit einem Huborgang (20, 21) verbunden ist und deren zweites Ende in einer Bohrung (7) einer Gehäusewand abdichtend geführt ist, wobei die Ventilspindel (15) eine Längsbohrung (25) aufweist, die benachbart dem zweiten Ende in mindestens eine Querbohrung (26) und benachbart dem ersten Ende in einen Anschlussstutzen (27) mündet, wobei die Ventilspindel (15) in eine erste Stellung, in welcher die Querbohrung (26) ausserhalb der Öffnung (7) ist und in eine zweite Stellung bewegbar ist, in welcher sie mit der Ventilkammer (10) kommuniziert, wobei die Querbohrung (26) in einer Zwischenstellung zwischen der ersten und zweiten Stellung sowohl gegen aussen als auch gegen die Ventilkammer (10) abgedichtet ist, und wobei die Ventilkammer (10) einen ersten Anschluss (33) für die Zufuhr von wahlweise einem der Medien: Sterilisationsmedium, steriles Gas und Reinigungsflüssigkeit, und einen zweiten Anschluss (32) zum Ableiten von Kondensat oder Reinigungsflüssigkeit hat.

2. Probeentnahmeventil nach Anspruch 1, wobei die Ventilspindel (15) benachbart dem ersten Ende gegenüber dem Gehäuse (15) durch ein elastisch deformierbares Dichtelement (19), insbesondere einen Faltenbalg oder eine Membran, abgedichtet ist, dessen eine Seite starr mit der Ventilspindel (15) und dessen andere Seite starr mit einem mit dem Gehäuse (2) verbundenen Teil (22) verbunden ist.

3. Vorrichtung zur verlustarmen Entnahme von Proben einer Flüssigkeit aus dem Innenraum eines Hohlkörpers (5), insbesondere eines Behälters oder einer Leitung, umfassend ein Probeentnahmeventil nach Anspruch 1 oder 2, wobei das Gehäuse (2) abdichtend mit dem Hohlkörper (5) derart verbindbar ist, dass die Öffnung (7) dem Innenraum (6) des Hohlkörpers (5) zugewandt ist, wobei am ersten Anschluss (33) ein erstes Ventil (51) für die Zufuhr eines Sterilisationsmittels, ein zweites Ventil (52) für die Zufuhr einer Reinigungsflüssigkeit sowie ein drittes Ventil (53) für die Zufuhr eines sterilen Gases angeschlossen ist und der zweite Anschluss (32) mit einem vierten Ventil (65) verbunden ist.

4. Vorrichtung nach Anspruch 3, wobei der Anschlussstutzen (27) über ein fünftes Ventil (70) mit einer Probentransferleitung (71) und vorzugsweise über ein sechstes Ventil (69) mit einer Entsorgungsleitung (66) verbunden ist.

5. Vorrichtung nach Anspruch 4, wobei das Gehäuse (2) an einen Tauchrohradapter (39) angeschlossen ist, wobei der Adapter (39) durch eine Trennwand (40) in eine der Ventilkammer (10) zugewandte erste Kammer (41) und eine zweite Kammer (42) unterteilt ist, wobei an die erste Kammer (41) ein Tauchrohr (43) angeschlossen ist, wobei die Trennwand (40) eine Durchgangsbohrung (44) koaxial zur Spindel (15) aufweist, und wobei die Spindel (15) eine Verlängerung (36) aufweist, die in der ersten Stellung die Durchgangsbohrung (44) abdichtend verschliesst.

6. Vorrichtung nach Anspruch 5, wobei der Anschlussstutzen (27) zusätzlich über ein siebtes Ventil (81) mit einer Quelle (54, 58) für steriles Druckgas verbindbar ist.

7. Vorrichtung nach Anspruch 6, wobei dem siebten Ventil (81) ein achtes Ventil (57) zur Verbindung mit der Druckgasquelle (58) und ein neuntes Ventil (82) zur Verbindung mit einer Vakuumquelle oder mit Atmosphärendruck vorgeschaltet ist, und wobei in der Leitung zwischen dem Anschlussstutzen (27) und dem siebten Ventil (81) ein Fühler (80) zur Erfassung des Niveaus der Flüssigkeit angeordnet ist.

8. Vorrichtung nach einem der Ansprüche 3 bis 7, wobei sie zusätzlich eine Einrichtung (68, 80) zum Dosieren der Probe aufweist.

9. Vorrichtung nach einem der Ansprüche 3 bis 8, wobei dem dritten Ventil (53) ein Sterilgasfilter (54) vorgeschaltet ist, und wobei eine Einheit (55) bestehend aus dem dritten Ventil (59) und dem Sterilgasfilter (54) über Kupplungen (56) lösbar mit dem Rest der Vorrichtung verbunden und autoklavierbar ist.

10. Vorrichtung nach einem der Ansprüche 3 bis 9, wobei das Probeentnahmeventil (1) und sämtliche übrigen Ventile mit einer Steuereinrichtung (73) zur automatischen Probeentnahme, Reinigung und Sterilisation verbunden sind.
